# EUROPEAN PATENT SPECIFICATION

(11) **EP 1 815 963 B1**
(45) Date of publication and mention of the grant of the patent: **31.12.2008**
(21) Application number: 07001522.7
(22) Date of filing: 24.01.2007
(51) Int. Cl.: B29C 44/34, B29K 101/10, B29K 105/12

(54) **Molding method of a fiber filler reinforced resin molded article and related apparatus**
Formverfahren eines faserverstärkten Harzverbundwerkstoffs und entsprechende Vorrichtung
Methode de moulage d'un article en résine renforcé de fibres et appareil approprié

(30) Priority: 02.02.2006 JP 2006026305
(43) Date of publication of application: 08.08.2007
(73) Proprietor: Mazda Motor Corporation, Aki-gun, Hiroshima 730-8670 (JP)
(72) Inventor: Ogawa, Junichi, Aki-gun Hiroshima 730-8670 (JP); Kaneko, Mitsuharu, Aki-gun Hiroshima 730-8670 (JP); Ichihara, Youhei, Aki-gun Hiroshima 730-8670 (JP); Tochioka, Takahiro, Aki-gun Hiroshima 730-8670 (JP)
(74) Representative: Müller-Boré & Partner Patentanwälte

(56) References cited:
- EP-A2- 0 972 626
- WO-A-02/47893
- US-A1- 2004 198 853
- US-A1- 2005 042 434
- US-B1- 6 169 122

## Description

The present invention relates to a molding method and apparatus of a fiber filler reinforced foam resin molded article.

A resin molded article that is made from a foam resin material has been recently used widely for the purpose of weight reduction and the like. A molding method of such a foam resin molded article is generally known, in which a super critical fluid (SCF) as a physical foaming agent is previously supplied to a thermoplastic resin, and then the resin is injected into a cavity (a space in a mold) for foaming with a pressure reducing.

Herein, in order to purse further weight reduction, a resin molded article that is reinforced with a fiber such as a glass fiber to increase strength and rigidity has been also developed. In a molding method of such a fiber filler reinforced foam resin molded article, the resin containing the reinforcement fiber is plasticized and kneaded (molten) in the cylinder of the injection unit by using a screw (a process before injecting into the mold), so that the reinforcement fiber can be mixed properly in the resin. Then, the super critical fluid is supplied to the molten resin with pressing and maintaining a certain pressure, which is followed by injecting the resin into the cavity for the foaming with the pressure reducing. For example, Japanese Patent Laid-Open Publication No. 2005-144750 discloses a molding method which comprises the steps of a) plasticizing/melting a thermoplastic resin and dissolving gas in the molten resin, b) injecting the molten resin into a cavity of a mold after metering, c) preventing foaming of gas by pressurizing the molten resin in the cavity and redissolving the gas in the molten resin, and d) foaming the gas with a volumetric reduction accompanied by cooling/solidification of the resin. Document US 2005/0042434 describes a similar method.

In a case where a fiber filler reinforced foam resin molded article is made with the conventional molding method disclosed in the above-described publication, there is a problem in that at a stage of plasticizing by agitating and kneading the reinforcement fiber and resin, the reinforcement fiber is cut and broken by the screw, so the resin molded article made may have poor properties that is worse than desired ones. In particular, when supplying the foaming agent, which is made of the super critical fluid or the like, into the cylinder for plasticizing, there may be the following problem.

Namely, in case of using the super critical fluid as the foaming agent, the super critical fluid is supplied into the molten resin in a pressurized state to prevent foaming, the pressure is maintained in the process of injecting the molten resin into the mold, and then the pressure is finally is reduced (released) in the cavity. Accordingly, the pressure applied to the molten resin in the cylinder is maintained to a high pressure before the injection. In the process of the spiral-shaped screw transmitting the molten resin in a downstream direction (injection end), the above-described pressure also acts on the upstream side of the supply portion of the super critical fluid, therefore a force operative to push back the molten resin, resin pellets, and reinforcement fiber is generated. Accordingly, there may be a necessity that the screw has a certain mechanism to prevent the counterflow of the molten resin containing the super critical fluid at a portion that is upstream of the supply portion of the super critical fluid.

This kind of anti counterflow mechanism generally comprises a labyrinth structure of resin flow path so as to prevent the upstream-direction pushing back. Herein, in case of applying the above-described structure of anti counterflow mechanism to the screw, there is a problem that the reinforcement fiber mixed with the resin is cut into pieces and broken when getting though this mechanism (labyrinth structure). Thus, the properties of the fiber filler reinforced foam resin molded article that is made by the molding method with the super critical fluid would deteriorate improperly.

The present invention has been devised in view of the above-described problems, and an object of the present invention is to provide a molding method and apparatus of a fiber filler reinforced resin molded article that can substantially prevent the reinforcement fiber from being broken and improve properties, such as strength, rigidity and the like.

This object is solved by the molding method or apparatus of a fiber filler reinforced resin molded article according to the present invention of claims 1 or 11. Preferred embodiments of the present invention are subject of the dependent claims.

According to the present invention, there is provided a molding method of a fiber filler reinforced resin molded article, which includes a plasticizing-kneading step of plasticizing and kneading at least one (kind or type of) reinforcement fiber and a resin in a material supply cylinder having a screw, and a supply step (preferably comprising a metering-injecting step) of supplying a foaming agent (preferably a physical or chemical foaming agent) to the resin plasticized in the plasticizing-kneading step and at least partly injecting the resin into a cavity of at least one mold, preferably after metering a necessary amount of the resin for molding, the molding method comprising a foaming-agent supplying step of supplying the foaming agent to the resin that has passed through at least one nozzle and/or valve after being plasticized in the plasticizing-kneading step, and a mixing-dispersion promoting step of promoting a mixing and/or dispersion of the foaming agent in the resin in a resin flow path from a supply portion of the foaming agent to the cavity of the mold.

Also, according to the present invention, there is provided a molding apparatus of a fiber filler reinforced resin molded article, which includes at least one mold having a cavity that a resin is injected therein, a plasticizing-kneading portion operative to plasticize and knead at least one (kind or type of) reinforcement fiber and the resin in a material supply cylinder preferably having a screw or gear worm, and a supply portion (preferably comprising a metering-injecting portion) operative to supply a foaming agent (preferably a physical or chemical foaming agent) to the resin plasticized in the plasticizing-kneading portion and inject the resin into the cavity of the mold, preferably after metering a necessary amount of the resin for molding, the molding apparatus comprising a foaming-agent supplying portion operative to supply the foaming agent to the resin that has passed through at least one nozzle or valve after being plasticized in the plasticizing-kneading portion, and a mixing-dispersion promoting portion operative to promote a mixing and dispersion of the foaming agent in the resin in a resin flow path from a supply portion of the foaming agent to the cavity of the mold.

According to the above-described present invention, after the reinforcement fiber and the resin are plasticized and kneaded in the material supply cylinder preferably with the screw, the foaming agent is supplied to this resin. Namely, the molten resin with which the reinforcement fiber(s) has been mixed is transmitted to a different portion, where the foaming agent is supplied to the resin. Thus, a supply portion of the foaming agent (foaming-agent supply portion) is separate from the portion where the reinforcement fiber(s) and the resin are plasticized and kneaded, so a high pressure that may be caused by the supply of the foaming agent can be prevented from influence on the portion where the reinforcement fiber and the resin are plasticized and kneaded. Accordingly, it is advantageously unnecessary to provide any anti counterflow mechanism at the screw like the conventional way, so the breakage of the reinforcement fiber can be prevented. Additionally, by improving mixing and/or dispersion of the foaming agent in the plasticized resin, properties of the fiber filler reinforced resin molded article, such as strength, rigidity and the like are improved.

Also, the supply of the foaming agent is done after the molten resin has passed through at least one nozzle and/or valve. Herein, the nozzle and/or valve open or close with an on-off operation, and they allow the resin flow with opening or prevent the resin flow with closing. Thus, by disposing at least one nozzle and/or valve at a proper portion upstream of the foaming-agent supply portion, the counterflow of the resin can be prevented. Further these nozzle and/or valve may not cause any breakage of the reinforcement fiber.

Furthermore, the mixing and/or dispersion of the foaming agent in the resin is promoted in the resin flow path from the supply portion of the foaming agent to the cavity of the mold. Herein, in a case where the supply portion of the foaming agent is separate from the portion where the reinforcement fiber and the resin are plasticized and kneaded, as described above, there is a concern that the mixing and dispersion of the foaming agent in the resin may get worse, compared to the conventional way. According to the above, however, there preferably is provided the portion for promoting the mixing and/or dispersion of the foaming agent substantially downstream of the foaming-agent supply portion (in the resin flow path from the supply portion of the foaming agent to the cavity of the mold), which can improve the mixing and/or dispersion properly.

As described above, since it may unnecessary to provide any counterflow mechanism at the screw, the breakage of the reinforcement fiber by the counterflow mechanism can be prevented. Also, since there is provided the portion for promoting the mixing and/or dispersion, the mixing and/or dispersion of the foaming agent can be ensured or improved.

Preferably, the foaming agent (preferably the physical or chemical foaming agent) includes any foaming agent with a pressure lower than the super critical pressure, other than the super critical fluid in the super critical state, particularly just excluding a chemical foaming agent that foams with a heat caused by a chemical reaction. Also, promoting of the mixing and/or dispersion in the resin flow path from the supply portion of the foaming agent to the cavity of the mold includes the one caused by agitation and/or mixing that occurs in the mold.

According to an embodiment of the molding method of the present invention, the mixing-dispersion promoting step comprises or is a step of agitation by utilizing a flow of the resin.

Also, according to another embodiment of the molding apparatus of the present invention, the mixing-dispersion promoting portion comprises or is a portion to provide an agitation that utilizes a flow of the resin.

According to the above-described embodiments, since the promotion of the mixing and/or dispersion is provided with the agitation by utilizing the flow of the resin that occurs substantially downstream of the supply portion of the foaming agent, the mixing and/or dispersion of the foaming agent in the resin can be promoted efficiently with the agitation effect.

According to another embodiment of the molding method of the present invention, the agitation utilizing the flow of the resin is caused by a supply of the foaming agent in the resin in the supply step (preferably in the metering-injecting step).

According to another embodiment of the molding apparatus of the present invention, the agitation utilizing the flow of the resin is caused by a supply of the foaming agent in the resin in the supply portion (preferably in the metering-injecting portion).

According to the above-described embodiments, since the agitation utilizing the resin flow caused by the supply (confluence) of the foaming agent is provided, the proper agitation can be attained in a simple way.

According to another embodiment of the molding method of the present invention, the mixing-dispersion promoting step comprises or is a step of adding a vibration to the resin.

According to another embodiment of the molding apparatus of the present invention, the mixing-dispersion promoting portion comprises a device operative to add a vibration to the resin.

According to the above-described embodiments, since the vibration is added to the resin, the mixing and/or dispersion of the foaming agent in the resin can be promoted.

According to another embodiment of the molding method of the present invention, the addition of the vibration comprises or is adding a supersonic-wave vibration and/or an electromagnetic-wave vibration.

According to another embodiment of the molding apparatus of the present invention, the device adding the vibration comprises or is a supersonic-wave vibration adding device and/or an electromagnetic-wave vibration adding device.

According to the above-described embodiments, since the vibration (agitating force) is added to the resin in the cylinder, the mixing and/or dispersion of the foaming agent in the resin can be promoted. Herein, means for adding the vibration comprises or is a mechanical-vibration adding device with a supersonic oscillator (vibrator device) and/or a heating-vibration adding device with electromagnetic waves. In a case of using the supersonic-wave vibration, a supersonic oscillator may be attached to (preferably a side wall of) the cylinder (outer face or inner face) of a second injecting portion, and the supersonic oscillator vibrates by receiving a supersonic voltage from a supersonic vibrator. In case of using the electromagnetic-wave vibration, the same performance is attained.

According to another embodiment of the molding method of the present invention, the mixing-dispersion promoting step comprises or is a step of a driven agitation with an agitating member being driven in the resin flow.

According to another embodiment of the molding apparatus of the present invention, the mixing-dispersion promoting portion comprises an agitating member being driven in the resin flow.

According to the above-described embodiments, the agitating member (for example, an agitating plate having plural through holes that is disposed in a space on a side of a junction portion of an injection piston) is disposed in the resin path (for example, in the cylinder at the foaming-agent supply portion), and the agitating member is driven (back and forth) in a state where the position of the injection piston is fixed. This reciprocal or back-and-forth movement of the agitating member can promote the mixing and/or dispersion of the foaming agent in the resin path (in the cylinder).

According to another embodiment of the molding method of the present invention, the mixing-dispersion promoting step comprises or is a step that is conducted in the resin flow path in the mold before the resin flowing into the cavity.

According to another embodiment of the molding apparatus of the present invention, the mixing-dispersion promoting portion is at least partly provided in the resin flow path in the mold before the resin flowing into the cavity.

According to the above-described embodiments, since the mixing-dispersion promoting step or portion are at least partly provided in the resin flow path in the mold before the resin flowing into the cavity, the mixing and dispersion of the foaming agent can be promoted in a simple and sure way, without providing any structural restrictions at the mold and any space problems in the device.

According to another embodiment of the molding method of the present invention, the mixing and/or dispersion of the foaming agent at least partly is promoted by injecting the plasticized resin with the reinforcement fiber(s) into a dilute resin to which the foaming agent has been supplied in the resin flow path in the mold.

According to another embodiment of the molding apparatus of the present invention, the promotion of mixing and/or dispersion of the foaming agent by the mixing-dispersion promoting portion at least partly is conducted by injecting the plasticized resin with the reinforcement fiber into a dilute resin to which the foaming agent has been supplied in the resin flow path in the mold.

According to the above-described embodiments, since the mixing and/or dispersion of the foaming agent is at least partly promoted by injecting the plasticized resin with the reinforcement fiber into the dilute resin to which the foaming agent has been supplied in the resin flow path in the mold, the promotion of the mixing and/or dispersion of the foaming agent can be attained in a simple and sure way, without providing any structural restrictions at the mold and any space problems in the device.

Herein, the resin with the reinforcement fiber means the one that contains much content of reinforcement fiber than that of the fiber filler reinforced resin molded article, and by mixing with the dilute resin to which the foaming agent has been supplied, it come to have a specified (determined, predetermined or predeterminable) content of a product (the reinforcement fiber of the fiber filler reinforced resin molded article). Also, the dilute resin preferably is resin for dilution, with which substantially no reinforcement fiber is mixed.

According to another embodiment of the molding method of the present invention, a viscosity of the resin with the reinforcement fiber is substantially equal to a viscosity of the dilute resin to which the foaming agent has been supplied.

According to the above-described embodiment, since the difference in the viscosity between the resin with the reinforcement fiber and the dilute resin to which the foaming agent has been supplied is small (preferably less than about 10%, more preferably less than about 5%, further preferably less than about 2%, most preferably less than about 1 %), the breakage of the reinforcement fiber can be suppressed and the smooth mixing of the both can be attained. Namely, if the viscosity of the dilute resin is improperly high, the reinforcement fiber would receive a large stress at the time of mixing, and thereby the risk of breakage of the reinforcement fiber would increase. Accordingly, it is preferable that the dilute resin have a properly low viscosity so that the large stress can be prevented from acting on the reinforcement fiber.

According to another embodiment of the molding method of the present invention, the plasticized resin with the reinforcement fiber is collected in a resin collection portion, and the collected resin is at least partly supplied to the mold through the supply portion, preferably through the metering-injecting portion.

According to the above-described embodiment, since the plasticized resin with the reinforcement fiber is collected in the resin collection portion once, the collected resin is at least partly supplied to the supply portion (preferably the metering-injecting portion), where the foaming agent is supplied, and then it is injected into the cavity of the mold through the metering-injecting portion, the mixing and dispersion of the foaming agent can be further promoted in a much simpler and sure way.

According to another embodiment of the molding method or apparatus of the present invention, the foaming agent comprises or is a super critical fluid.

According to the above-described embodiment, the above-described improvement of the mixing and dispersion of the foaming agent can be attained properly, so the fiber filler reinforced resin molded article having a properly fine foam cell can be provided and its properties can be further improved.

Other features, aspects, and advantages of the present invention will become apparent from the following description which refers to the accompanying drawings.
FIG. **1A** is a side view showing an entire structure of a fiber filler reinforced resin injection molding apparatus according to a first embodiment of the present invention, FIG. **1** **B** is a sectional view showing a cylinder inside of a first injecting portion, and FIG. **1C** is a sectional view showing a structure of a major portion of the cylinder inside of a second injecting portion.
FIG. **2** is a sectional view showing a major portion of a mixing nozzle.
FIG. **3** is a side view showing a schematic structure of the fiber filler reinforced resin injection molding apparatus that is equipped with the mixing nozzle (first attaching state) according to the first embodiment.
FIG. **4** is a side view showing a schematic structure of the fiber filler reinforced resin injection molding apparatus that is equipped with the mixing nozzle (second attaching state) according to the first embodiment.
FIG. **5** is a side view showing a schematic structure of the fiber filler reinforced resin injection molding apparatus that is equipped with the mixing nozzle (third attaching state) according to the first embodiment.
FIG. **6** is a sectional view of a mold in which the mixing nozzle and a similar agitating device are provided at a hot runner portion.
FIG. **7** is a side view of a physical foaming-agent supply portion in which a porous member is disposed at an inside wall of a supply nozzle.
FIG. **8A** is a sectional view showing a cylinder inside of the second injecting portion with a supersonic oscillator (or an electromagnetic-wave oscillator) of a vibration adding device, and FIG. **8B** is a sectional view showing an attachment state of an agitating plate in the cylinder inside of the metering injecting portion.
FIG. **9** is a side view showing a schematic structure of a fiber filler reinforced resin injection molding apparatus according to a second embodiment of the present invention.
FIG. **10** is a side view showing a schematic structure of a fiber filler reinforced resin injection molding apparatus according to a third embodiment of the present invention.
FIG. **11** is a side view showing a schematic structure of a modified fiber filler reinforced resin injection molding apparatus according to the first embodiment, in which a physical-agent supply portion is located at a junction portion.
FIG. **12** is a side view showing a schematic structure of a modified fiber filler reinforced resin injection molding apparatus according to the second embodiment, in which the physical-agent supply portion is located downstream of a resin collection portion.
FIG. **13** is a side view showing a schematic structure of a modified fiber filler reinforced resin injection molding apparatus according to the second embodiment, in which the physical-agent supply portion is located upstream of the resin collection portion.
FIG. **14** is a side view showing a schematic structure of a modified fiber filler reinforced resin injection molding apparatus according to the third embodiment, in which the mixing nozzle is attached downstream of two injecting portions.

Hereinafter, preferred embodiments of a molding method and apparatus of a fiber filler reinforced resin molded article of the present invention will be described specifically. It should be understood that even though embodiments are separately described, single features thereof may be combined to additional embodiments.

### EMBODIMENT 1

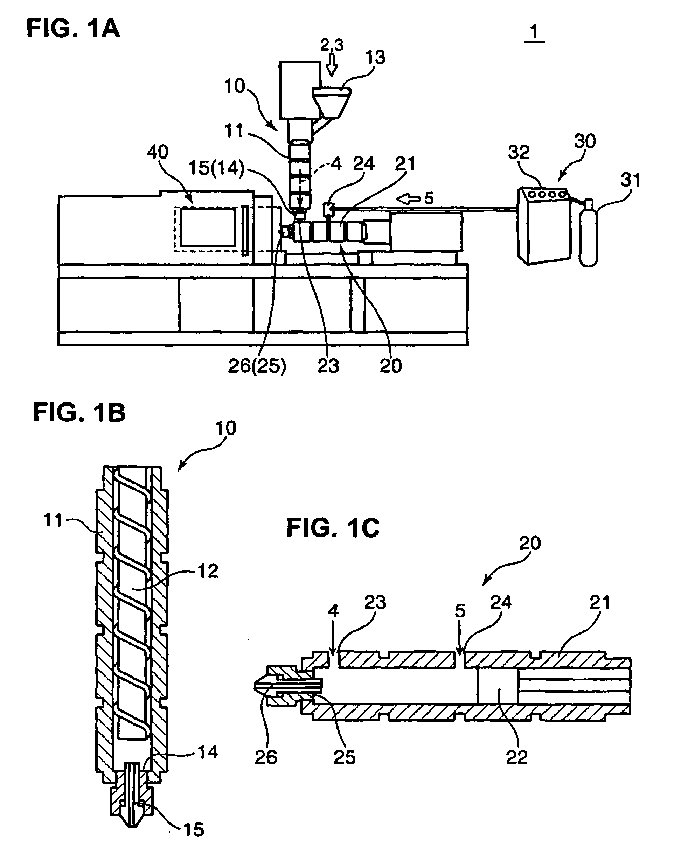

An entire structure of a fiber filler reinforced resin injection molding apparatus according to a first preferred embodiment of the present invention is shown in FIG. **1**. The fiber filler reinforced resin injection molding apparatus **1** comprises one or more, preferably two injection units of a first injecting portion **10** and a second injecting portion 20, a super critical fluid (SCF) supply unit **30,** and at least one mold **40.**

The first injecting portion **10** (as a preferred plasticizing and kneading portion) has a screw or worm gear **12** in a cylinder **11,** and kneads, mixes and/or conveys a reinforcement fiber **3** and a resin **2** which is provided from a hopper **13** with a rotation or movement of the screw **12** for plasticizing or plasticating (melting). And, it transmits (preferably injects or conveys) a plasticized molten resin **4** containing the at least one reinforcement fiber **3** (hereinafter, referred to as resin composite **4**) from an injecting end **14** (downstream outlet) toward a junction portion **23** to a second injecting portion **20,** which will be described below. At the injecting end **14** of the first injecting portion **10** preferably is provided a shut-off nozzle **15** that conducts an on-off operation.

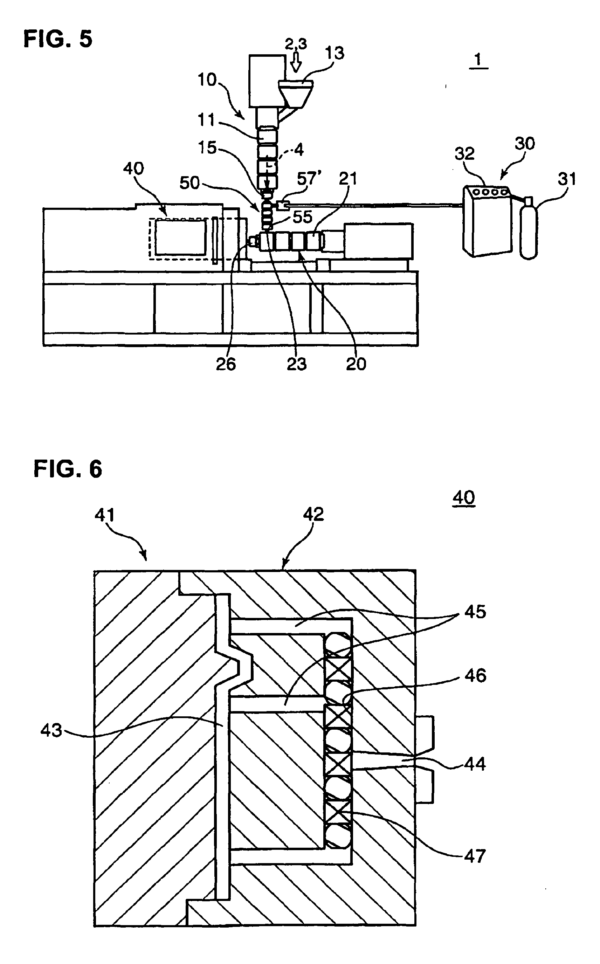

The second injecting portion **20** (as a preferred metering injecting portion) includes an injection piston **22** in a cylinder **21,** and guides the resin composite **4** containing the reinforcement fiber **3** to the junction portion **23.** Further, after metering of the resin composite **4** for a necessary amount for molding, a (preferably physical or chemical) foaming agent **5** that preferably has been supplied from the SCF supply unit **30** is supplied into the resin composite **4** at a foaming-agent supply portion **24.** Then, after mixing and/or dispersion, the resin composite **4** is at least partly injected into a cavity **43** (see FIG. **6**) of the mold **40** with a reciprocating movement of the injection piston **22.** Herein, supplies of the resin composite **4** and the (physical or chemical) foaming agent **5** from the foaming-agent supply portion **24** at the junction portion **23** preferably are controlled so as to be conducted almost at the same time. Thus, the supply (confluence) of the (physical or chemical) foaming agent **5** to the resin composite **4** at the junction portion functions as a preferred mixing-dispersion promoting portion that promotes mixing and/or dispersion of the (physical or chemical) foaming agent **5** in the resin composite **4.** Accordingly, since an agitating portion (means) preferably is formed by utilizing the flow of resin composite **4** itself, the mixing-dispersion promoting portion can be materialized with a simple way. However, additionally they may be provided a separate agitating portion. Thus, the resin composite **4** with the sufficiently mixed (physical or chemical) foaming agent **5** is injected into the cavity **43** of the mold **40.** At an injecting end **25** (downstream portion or outlet) of the second injecting portion **20** is provided a shut-off nozzle **26** that conducts an on-off operation as properly.

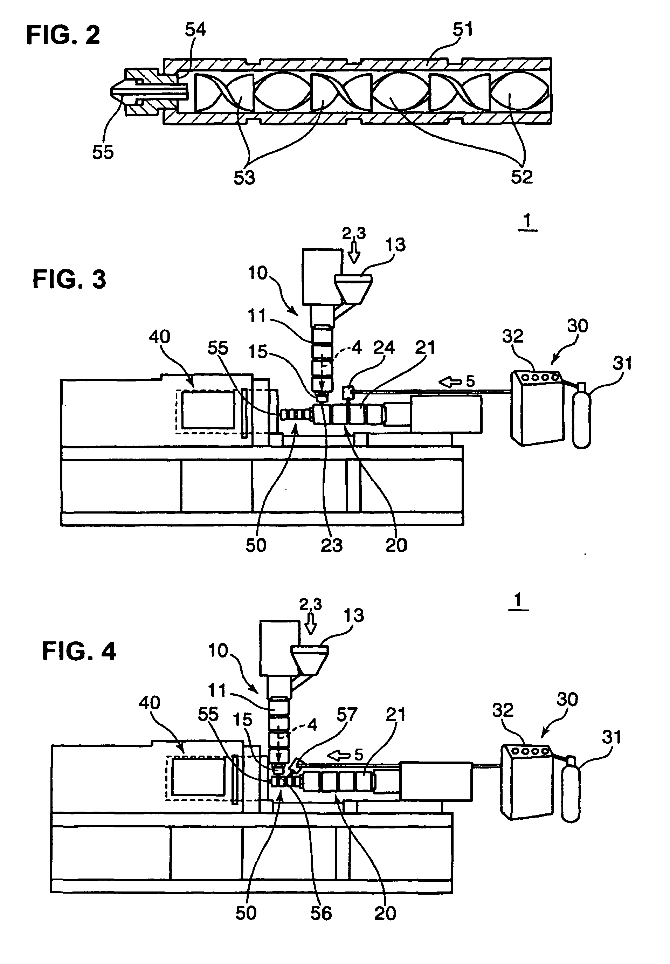

The SCF supply unit **30** guides the foaming agent **5** into the fiber filler reinforced resin injection molding apparatus **1,** in which the foaming agent **5** is supplied into the resin composite **4** at a specified (predetermined or predeterminable) supply portion (such as one or more foaming-agent supply portions **24, 57**) provided at the second injecting portion **20** and/or a mixing nozzle **50** (see FIG. 4) which will be described below. The SCF supply unit **30** comprises a fluid or gas reservoir **31** with a raw fluid or gas stored therein, and a pressure-increase control portion **32** to increase a pressure of the raw fluid or gas from the gas reservoir **31** to a specified (predetermined or predeterminable) pressure and control a supply amount of the pressure-increased (physical or chemical) foaming agent into the cylinder.

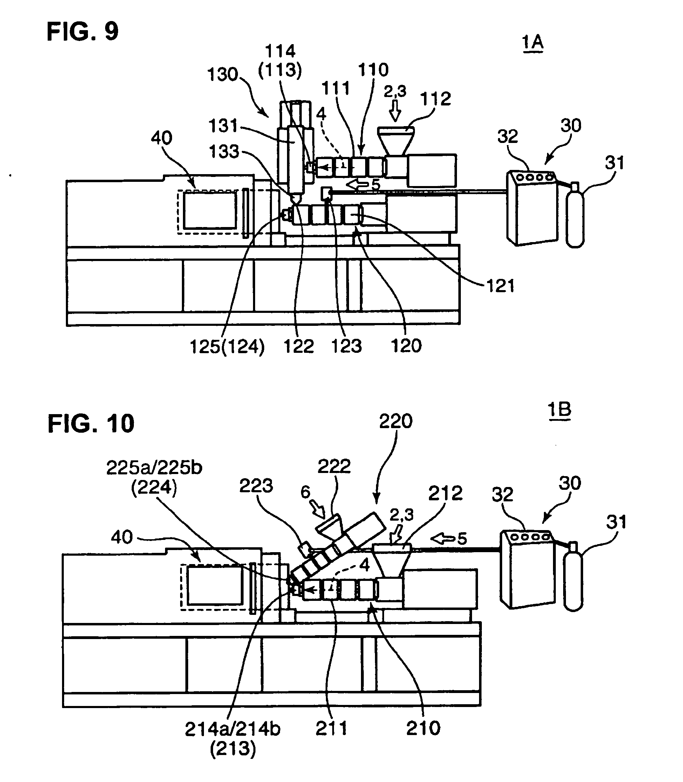

The shut-off nozzles **15, 26** at the injecting ends **14, 25** (downstream outlets) of the first and second injecting portions **10, 20** allow the resin composite **4** flow downstream preferably by releasing an upstream pressure (to a normal pressure in the plasticizing-kneading state), and when closing, substantially ensures sealing in the nozzle (prevents counterflow). Herein, since these nozzles **15, 26** with no labyrinth structure preferably are just operated to open or close and not provided at the screw **12,** the reinforcement fiber **3** may not be broken or hurt by operations of the nozzle. Also, any other type of devices, such as one or more valves **114, 133** (see FIG. 9) of the second embodiment, which will be described below, may be applied instead of the above nozzles **15, 26** as long as they can shut the pressure by close/open operation, avoiding any breakage of the reinforcement fiber 3. Herein, either one of nozzles **15** (**26**) may be used and the other is replaced by one of valves **133 (114).**

According to the present embodiment, the resin composite **4,** which is formed with the resin **2** and the reinforcement fiber(s) **3** that have been plasticized and kneaded at the first injecting portion **10,** is transmitted to the second injecting portion **20,** where the (preferably physical or chemical) foaming agent **5** is supplied to this resin (at the foaming-agent supply portion **24**). Thereby, the mixing and dispersion of the foaming agent **5** in the resin composite **4** is promoted by the supplies of the resin composite **4** and the foaming agent **5**. Then, after preferably metering of the resin composite 4 for the necessary amount for molding, the resin composite **4** at least partly is injected into the mold **40** (cavity **43**) from the injecting end **25** of the second injecting portion **20**.

Thus, since the supply portion of the (physical or chemical) foaming agent **5** (foaming-agent supply portion **24**) is separate from the portion where the reinforcement fiber **3** and the resin **2** are plasticized and kneaded (plasticizing-kneading portion of the first injecting portion **10**), a high pressure that may be caused by the supply of the (physical or chemical) foaming agent **5** can be prevented from influencing on the portion where the reinforcement fiber **3** and the resin **2** are plasticized and kneaded. Accordingly, it is advantageously unnecessary to provide any anti counterflow mechanism at the screw like the conventional way, so the breakage of the reinforcement fiber **3** can be prevented.

Also, according to the present embodiment, the supply of the (physical or chemical) foaming agent **5** is conducted at the foaming-agent supply portion **24** after the molten resin has passed through at least one nozzle (shut-off nozzle **15**). And, there is provided the junction portion **23** to prove the mixing and dispersion of the (physical or chemical) foaming agent **5** in the resin composite **4** containing reinforcement fiber(s) **3** in the resin flow path from the supply portion of the (physical or chemical) foaming agent **5** (foaming-agent supply portion **24**) to the cavity **43** of the mold **40.**

Herein, in a case where the foaming-agent supply portion **24** is separate from the portion where the reinforcement fiber(s) **3** and the resin **2** are plasticized and kneaded, as described above, there is a concern that the mixing and dispersion of the (physical or chemical) foaming agent **5** in the resin composite **4** may get worse. According to the present embodiment, however, there preferably is provided the portion (junction portion **23**) for promoting the mixing and/or dispersion of the (physical or chemical) foaming agent **5** downstream of the foaming-agent supply portion **24** (in the resin flow path from the supply portion of the physical foaming agent **5** to the cavity **43** of the mold **40**), which can improve the mixing and/or dispersion properly. Namely, since the agitating portion (means) preferably is formed by utilizing the flow of resin composite **4** itself, the mixing-dispersion promoting portion can be advantageously materialized with the simple way.

As described above, according to the present embodiment of the invention, since it may unnecessary to provide any counterflow mechanism at the screw **12,** the breakage of the reinforcement fiber **3** by the counterflow mechanism can be prevented. Also, since there is provided the portion step or portion for promoting the mixing and/or dispersion, the mixing and/or dispersion of the (physical or chemical) foaming agent 5 can be ensured or improved.

In the present embodiment, a thermoplastic resin is used as the following resin 2, and the following thermoplastic resin may be applied; polyethylene-based resin, polypropylene-based resin, acrylonitrile-butadiene-styrene copolymer (ABS resin), polystyrene-based resin, polycarbonate-based resin, polyethylene terephthalate, polybutylene terephthalate, acrylonitrile-styrene copolymer (AS resin), sybdiotactic polystyrene, polymethyl methacrylate, polyphenylene sulfide, polyether sulfone, polyarylate, polyamide, polyimide, liquid crystal resin, polyphenylene oxide, polyacetal, polyethylene naphthalate, and so on. Especially, the polypropylene-based resin, polystyrene-based resin, polycarbonate-based resin, sybdiotactic polystyrene, polyphenylene sulfide are preferable, and polypropylene-based resin are more preferable. Also, polymer blend is applicable as the thermoplastic resin.

Also, as the reinforcement fiber(s) **3,** glass fiber, carbon fiber, inorganic whisker, potassium titanate whisker, and so on may be applied.

The content of the thermoplastic resin **2** with respect to the thermoplastic resin composite **4** is preferably about 20 - about 95 wt%, more preferably about 60 - about 90 wt%. There is a concern of a poor flowing function or a weak mechanical rigidity if the content of the thermoplastic resin **2** is too small. Also, the content of the reinforcement fiber **3** with respect to the thermoplastic resin composite **4** is preferably about 0 - about 50 wt%, more preferably about 10 - about 40 wt%.

Further, to the above-described thermoplastic resin composite **4** may be added an additive or changing agent, such as powder fillers, plasticizing agent, stabilizing agent, anti oxidant, ultraviolet-ray absorbent, anti-charging agent, flame retarder, or flame-resistant agent.

The physical foaming agent **5** in the present embodiment includes any foaming agent with a pressure lower than the super critical pressure, other than the super critical fluid in the super critical state (Super Critical Fluid: SCF), just excluding a chemical foaming agent that foams with a heat caused by a chemical reaction. Although any type of physical foaming agent **5** (as the preferred foaming agent) may be applied in the present embodiment as long as it can be molten in the thermoplastic resin composite **4** and is an inert gas regardless of being in the super critical state, the super critical fluid of carbon dioxide, nitrogen or composite gas of these is preferable from viewpoints of safety, costs and the like. A super critical fluid is a fluid that is in a state where the temperature and pressure of the fluid exceeds respectively the critical temperature and/or pressure that allow the at least partial coexistence of gas and liquid. And, when the (physical or chemical) foaming agent **5** of these gas is applied, the foaming agent **5** can be mixed and/or dispersed properly, thereby providing the fiber filler reinforced resin molded article (product) having a properly fine foam cell and a further improved properties.

The application of the super critical fluid of carbon, dioxide may be more preferable because of little damage against the global environment. The critical temperature of the carbon dioxide is 31.3 °C and the critical pressure thereof is 7.4 MPa, and the critical temperature of the nitrogen is - 147 °C and the critical pressure thereof is 3.4 MPa. Accordingly, the super critical state of these can be easily maintained by heating and pressuring (herein, heating may not be necessary for the nitrogen). Also, since the super critical fluid of the carbon dioxide or nitrogen functions as a plasticizing agent, the flowing of the resin can be improved, thereby providing the injection molding of the resin composite **4** containing the reinforcement fiber 3 with better flowing properties.

It is preferable from viewpoints of ensuring a sufficient supply speed that the pressure at a time the physical foaming agent **4** is supplied to the thermoplastic resin composite **4** be set to about 15 MPa or more, further preferably about 20 MPa or more. The supply amount of the (physical or chemical) foaming agent **5** depends on the kind thereof, but it is preferable that the supply amount with respect to about 100 wt% of the thermoplastic resin composite **4** be set to about 0.1 - about 20 wt%, further preferably about 0.5 - about 10 wt%. Accordingly, the properly fine foam cell can be provided while advantageously avoiding that the foam cell may become too large and an appearance of the molded article may deteriorate.

In the present embodiment, the mold **40** comprises at least one stationary mold **41** and at least one movable mold **42,** which are made from metal or steel material such as carbon steel, aluminum alloy, or copper alloy, as shown in FIG. **6****.** The cavity **43** is formed by these molds **41, 42** coupled to each other, and a hot runner portion **46** is provided in a flow path of the molten resin composite **5** from an injection supply hole **44** (nozzle) to a gate **45.**

Further, the following modified embodiments of the fiber filler reinforced resin injection molding apparatus 1 equipped with some means for promoting the mixing and dispersion of the physical foaming agent 5 may be applied.

### 1. Mixing-dispersion promotion of the physical foaming agent by utilizing flowing (agitation) of the resin composite

### 1) Mixing promotion using mixing nozzle

First, the mixing promotion using at least one mixing nozzle as a means utilizing flowing of the resin composite **4** will be described. A mixing nozzle **50** is configured, as shown in FIG. **2****,** such that elements **52** that are made of substantially flat plats respectively by twisting (e.g. clockwise) by about 180 degrees spirally and other elements **53** that are made of substantially flat plates respectively by twisting in another direction (e.g. counterclockwise) by about 180 degrees substantially spirally are disposed one substantially after the other in a cylindrical nozzle **51.** The resin composite **4** that has been guided in the mixing nozzle **51** is twisted (clockwise and counterclockwise) repeatedly when proceeding in the nozzle **51.** Thereby, the mixing and/or dispersion of the reinforcement fiber(s) **3** and the physical foaming agent **5** can be promoted. Herein, the internal structure of the mixing nozzle **50** is not limited to the above-described one, but any modifications may be applied as long as the molten resin (resin composite **4**) can be substantially agitated properly in the resin flowing path and thereby the mixing and/or dispersion and/or dispersion of the reinforcement fiber(s) **3** and (physical or chemical) foaming agent **5** can be promoted. And, for example, a shut-off nozzle **55** is provided at a supply outlet **54** of the resin composite **4** agitated in the mixing nozzle **50.**

The following three embodiments for attaching the mixing nozzle **50** may be exemplified.
A) In a first attaching embodiment shown in FIG. **3****,** the junction portion **23** to the first injecting portion **10** is formed on a side of the injecting end **14** of the second injecting portion **20,** the mixing nozzle **50** is provided substantially between the downstream an outlet of the junction portion **23** and the injection supply hole **44,** and the foaming-agent supply portion **24** is provided substantially upstream of the junction portion **23** of the second injecting portion **20.** The resin composite **4** containing the reinforcement fiber(s) **3,** which are kneaded at the first injecting portion **10,** is supplied to the junction portion **23** to the second injecting portion **20.** The (physical or chemical) foaming agent **5** is supplied to the resin composite **4,** and after metering of the resin composite **4** for the necessary amount for molding, the resin composite **4** at least partly is supplied into the cavity **43** of the mold **40** via the mixing nozzle **50.** Herein, as described above, the mixing and/or dispersion of the (physical or chemical) foaming agent **5** in the resin composite **4** is promoted when the (physical or chemical) foaming agent **5** is supplied and also when the resin composite **4** flows down in the mixing nozzle **50.**
B) In a second attaching embodiment shown in FIG. **4****,** the mixing nozzle **50** is provided between the injecting end **25** of the second injecting portion **20** and the injection supply hole **44** (see FIG. **6**) of the mold **40,** a junction portion **56** to the first injecting portion **10** is formed substantially downstream of the mixing nozzle **50,** and a foaming-agent supply portion **57** is provided substantially between the supply outlet **54** (injecting end **25** of the second injecting portion **20**) of the mixing nozzle **50** on the side of the first injecting portion **10** and the junction portion **56.** The resin composite 4 containing the reinforcement fiber(s) **3,** which are supplied from the first injecting portion **10,** is supplied via the junction portion **56** of the mixing nozzle **50.** The resin composite **4** containing the reinforcement fiber(s) **3** is further supplied to the second injecting portion **20,** and after metering of the resin composite **4** for the necessary amount for molding at the second injecting portion **20,** the resin composite **4** at least partly is supplied into the cavity **43** of the mold **40** via the mixing nozzle **50.** Herein, when the resin composite **4** is supplied to the second injecting portion **20,** the (physical or chemical) foaming agent **5** is supplied from the foaming-agent supply portion **57,** and the mixing and/or dispersion of the (physical or chemical) foaming agent **5** in the resin composite **4** is promoted when flowing down in the mixing nozzle **50.**
C) In a third attaching embodiment shown in FIG. **5****,** an upstream end of the mixing nozzle **50** is connected to the injecting end **14** (shut-off nozzle **15**) of the first injecting portion **10,** a downstream end (supply outlet **54**) of the mixing nozzle **50** is connected to the junction portion **23** of the second injecting portion **20,** and a foaming-agent supply portion **57'** is provided substantially at a portion just downstream of the upstream end of the mixing nozzle **50.** The resin composite **4** containing the reinforcement fiber(s) **3** is supplied to the mixing nozzle **50** from the first injecting portion **10.** At the same time, the (physical or chemical) foaming agent **5** is supplied from the foaming-agent supply portion **57'.** The resin composite **4** containing the reinforcement fiber(s) **3** is supplied to the second injecting portion **20,** and preferably after metering of the resin composite **4** for the necessary amount for molding at the second injecting portion, the resin composite is supplied into the cavity of the mold. Herein, when the resin composite **4** flows down in the mixing nozzle **50** and when the resin composite is supplied to the junction portion **23** of the second injecting portion **20,** the mixing and/or dispersion of the (physical or chemical) foaming agent **5** in the resin composite **4** is promoted.

As described above, the promotion of the mixing and/or dispersion of the (physical or chemical) foaming agent **5** is materialized by the means (for example, mixing nozzle **50)** that has a mixing-dispersion function by utilizing the resin flowing and is provided substantially downstream of the supply portion (foaming-agent supply portions **24, 57, 57'**) of the physical foaming agent **5.** Thereby, the mixing and/or dispersion of the (physical or chemical) foaming agent **5** in the resin composite **4** can be efficiently promoted.

### 2) Mixing promotion with mixing portion provided at hot runner portion in mold

A mixing portion **47** that has the kneading-agitating function as the above-described mixing nozzle **50** may be provided in the flow path (e.g., hot runner **46**) of the resin composite **4** from the supply inlet hole **44** to the gate **45** in the mold **40** as shown in FIG. **6****.** Thereby, the mixing and/or dispersion of the reinforcement fiber(s) **3** and/or of the (physical or chemical) foaming agent **4** can be promoted before the resin composite **4** flows into the mold **40** (gate **45).** Since the mixing-dispersion promoting means (portion) is provided in the resin flow path in the mold **40,** the mixing and/or dispersion of the foaming agent **5** can be promoted in a simple and sure way, without providing any structural restrictions at the mold and any space problems in the device. Herein, in a case where the mixing-dispersion promoting means (portion) such as the mixing nozzle **50** is provided at a portion before (upstream) the mold **40,** there may be no needs for any structural change of the mold **40.**

### 2. Mixing-dispersion promotion of the (physical or chemical) foaming agent by a porous structure at the foaming-agent supply portion

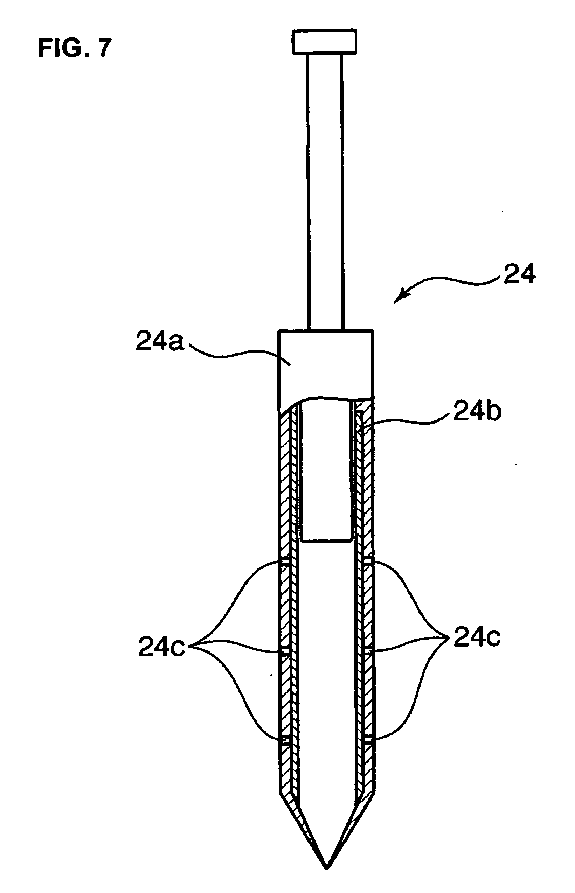

A porous structure **24b** (e.g., a metal or ceramic porous member) may be disposed at or on (preferably an inner wall face of) the injection nozzle **24a** at the foaming-agent supply portion **24** of the second injecting portion **20** as shown in FIG. **7****.** Thereby, the physical foaming agent **5** is introduced into the resin composite **4** with an increased contacting face, so a prompt dispersion of the foaming agent **5** into the resin composite **4** can be attained (namely, by enhancing dispersibility of the foaming agent **5** in the resin composite **4**), thereby promoting the mixing and/or dispersion with a simple and sure way.

### 3. Mixing-dispersion promotion of the (physical or chemical) foaming agent by a vibration adding means (device) at the second injecting portion

The mixing and/or dispersion of the foaming agent **5** may be preferably promoted by a vibration adding means (for example, supersonic-wave vibration adding device, electromagnetic-wave vibrator, or driven agitating mechanism) provided at the second injecting portion **20.**

### 1) Supersonic-wave vibration adding device or electromagnetic-wave vibrator

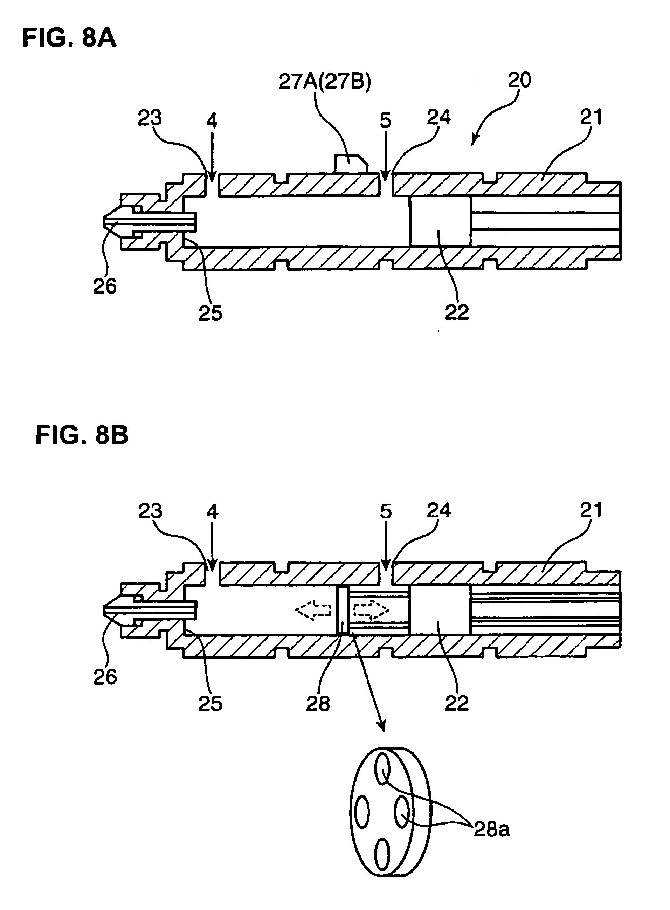

For example, a mechanical-vibration adding device with a supersonic oscillator (vibrator device) and/or a heating-vibration adding device with an electromagnetic-wave vibrator may be applied as the vibration adding device. In a case of using a supersonic vibration, as shown in FIG. **8A****,** a supersonic oscillator **27A** is attached to (preferably the side wall of) the cylinder **21** (cylinder barrel outer face) of the second injecting portion **20.** The supersonic oscillator **27A** vibrates by receiving a supersonic voltage from a supersonic vibrator, not illustrated, so the vibration (agitating force) can be added to the resin composite **4** in the cylinder **21.** An attaching portion of the supersonic oscillator **27A** is not limited to the above-described portion. In a case of using an electromagnetic-wave vibration adding device, an attachment of an electromagnetic-wave vibrator **27B** is similar or substantially the same as above.

Thus, the vibration is added to the resin composite **4** with the device such as the supersonic oscillator **27A** and/or electromagnetic-wave vibrator **27B,** so the mixing and dispersion of the physical foaming agent **5** in the resin composite 4 can be promoted.

### 2) Driven agitating device

As shown in FIG. **8B****,** at least one agitating plate **28** (driven agitating device) having one or more, preferably plural through holes **28a** is disposed in a space that is located substantially on a side of the junction portion **23** before the injection piston **22** in the cylinder **21** of the second injecting portion **20.** This agitating plate **28** is operated so as to move back and forth (reciprocate) in a state where the location of the injection piston **22** is fixed. Thereby, the resin composite **4** is made at least partly get through these holes **28a** according to the back-and-forth movement of the agitating plate **28** (generating a turbulence), so the mixing and/or dispersion of the (physical or chemical) foaming agent **5** in the resin composite **4** can be promoted. When the injection is conducted, both the injection piston **22** and the agitating plate **28** are moved forward to at least partly inject the resin composite **4** into the mold **40.**

Herein, when the injection is conducted, the agitating plate **28** is moved substantially forward along with the injection piston **22** in a state where it is fixed to the piston **22,** or previously moved substantially forward before the piston **22** is moved forward, so that the agitating plate **28** can be prevented from interfering with the movement of the injection piston **22** at the injection. A shape or the number of the through holes **28a** of the agitating plate **28** should not be limited to an illustrated substantially circular shape and/or four. Also, something like the above-described elements **52, 53** (substantially 180-degree clockwise and counterclockwise twisted plates) applied to the mixing nozzle **50** may be provided at the holes **28a,** or the holes **28a** may be formed to be substantially of a spiral shape like these elements **52, 53.** Thereby, the effect of the promotion of mixing and dispersion by the agitating plate **28** can be enhanced.

Further, any type of agitating device other than the above plate **28,** which can add the flowing force to the resin composite **4** with a reciprocating drive or a rotating drive and thereby agitate it, may be applied. For example, a propeller type of member with agitating wings may be rotated, or a plate member with circular holes having agitating wings therein may be reciprocated.

### EMBODIMENT 2

An entire structure of a fiber filler reinforced resin injection molding apparatus according to a second preferred embodiment of the present invention is shown in FIG. **9****.** A fiber filler reinforced resin injection molding apparatus **1A** basically comprises a plasticizing or plasticating pushing portion **110,** metering injecting portion **120,** resin collection portion **130,** super critical fluid (SCF) supply unit **30** and at least one mold **40.**

The plasticizing pushing portion **110** (plasticizing-kneading portion) substantially corresponds to the first injecting portion **10** of the injection molding apparatus **1** of the first embodiment. The resin composite **4** plasticized at the plasticizing pushing portion **110** is supplied to the resin collection portion **130** provided substantially downstream thereof, where the resin is collected temporarily in a collector **131.** Thus, the plasticizing pushing portion **110** needs not have an injection function (e.g. with the screw) like the above-described first injecting portion **10,** but have a pushing function (e.g. with the screw). Also, the metering injecting portion **120** substantially corresponds to the second injecting portion **20** of the injection molding apparatus **1** of the first embodiment. In the second embodiment, one or more valves **114, 125** preferably having just an on-off operation, instead of the shut-off valves **15, 26** of the first embodiment, are provided at a pushing end **113** of the plasticizing pushing portion **110** and an injecting end **124** (outlet) of the metering injecting portion **120.** These valves **114, 125** function in the similar or substantially same way as the shut-off valves **15, 26,** and when closing, ensures sealing in the nozzle by preventing counterflow of the resin composite **4.** The reinforcement fiber(s) **3** may not be broken by these valves either. Other components are the same as those of the first embodiment, and their descriptions are omitted here.

According to the fiber filler reinforced resin injection molding apparatus **1A,** the plasticizing pushing portion **110** preferably includes a screw, not illustrated, in a cylinder **111,** the resin **2** and one or more reinforcement fiber(s) **3** that are supplied from a hopper **112** are mixed and/or kneaded with the rotation of the screw for plasticizing (melting). Then, the plasticized resin composite **4** is supplied (pushed out) to the resin collection portion **130,** and temporarily collected in the collector **131.** The collected resin composite **4** preferably is metered for the necessary amount for molding by the operation of the valve **133,** and supplied to a junction portion **122** to the second injecting portion **120.**

The metering injecting portion **120** has a piston, not illustrated, in a cylinder **121,** and guides the resin composite **5,** which has been plasticized at the plasticizing pushing portion **110** and temporarily collected in the collector **131** of the resin collection portion **130** to the junction portion **122,** and makes the physical foaming agent **5** supplied from the SCF supply unit **30** at the foaming-agent supply portion **123** be mixed with the resin composite **4.** Then, after metering of the resin composite **4** for the necessary amount for molding, it injects the resin composite **4** into the cavity **43** of the mold **40** preferably with a reciprocating movement of the injection piston. Herein, supplies of the resin composite **4** and the (preferably physical or chemical) foaming agent **5** from the foaming-agent supply portion **123** at the junction portion **122** are controlled so as to be conducted almost at the same time. Thus, the supply of the foaming agent **5** to the resin composite **4** at the junction portion promotes the mixing and/or dispersion of the foaming agent **5** in the resin composite **4.** Thus, the resin composite **4** with the sufficiently mixed foaming agent **5** at least partly is injected into the cavity **43** of the mold **40.**

As described above, according to the second embodiment, the resin composite **4** containing the reinforcement fiber(s) **3** is temporarily at least partly collected in the collector **130,** and after the metering, the resin composite **4** preferably is supplied to the metering injecting portion **120.** At the metering injecting portion **120,** the foaming agent **5** is supplied into the resin composite **4,** and injected into the cavity **43** of the mold **40** via the metering injecting portion **120.** Herein, the supply of the foaming agent **5** can further promote the mixing and/or dispersion of the foaming agent **5** in the resin composite **4.** This function of promotion and effects by this function are similar or substantially the same as those of the first embodiment. Also, since the valves **114, 125** preferably have the labyrinth structure, any breakage of the reinforcement fiber **3** can be avoided.

Further, the apparatus of the second embodiment may have no needs for two injection units, the second embodiment has an advantage of low costs and less power-consumption, compared with the first embodiment.

### EMBODIMENT 3

An entire structure of a fiber filler reinforced resin injection molding apparatus **1 B** according to a third preferred embodiment of the present invention is shown in FIG. **10****.** The apparatus **1 B** is similar or substantially the same as the first embodiment in having two injection units, but different from that in injecting the resin composite **4** and others from the two injection units into the mold **40** directly at the substantially same time.

A first injecting portion **210** (plasticizing-kneading portion) of the third embodiment preferably includes a screw, not illustrated, which is preferable against the fiber breakage, in a cylinder **211,** and the resin **2** to which lots of the reinforcement fiber(s) **3** are added is supplied from a hopper **212** and then plasticized and kneaded. Then, after preferably metering of the resin composite **4** for a necessary amount for molding, the resin composite **4** is injected into the mold **40** directly. Herein, the above resin **2** to which lots of reinforcement fiber(s) **3** are added means that the resin **2** contains much more content of reinforcement fiber(s) **3** than that of the fiber filler reinforcement resin molded article as a product. Then, a dilute resin **6,** which will be described below, is mixed with this resin **2,** so that the content of reinforcement fiber(s) **3** can be maintained to a specified (desired, predetermined or predeterminable) content of the fiber of the final product (fiber filler reinforcement resin molded article). The screw that is preferable against the fiber breakage is the one that suppresses breakage of reinforcement fiber(s) **3** from being broken badly because of its proper screw shape or the like. Also, there preferably are not provided any things, like the anti counterflow, that might cause breakage of the reinforcement fiber(s) **3** at the first injecting portion **210.** At an injecting end **213** (outlet) of the portion **210** are provided at least one shut-off nozzle **214a** like the first embodiment and/or at least one valve **214b** like the second embodiment. These are operated to open or close with their on-off operation, so the resin composite **4** is injected into the mold **40** advantageously without any breakage of the reinforcement fiber(s) **3.**

A second injecting portion **220** (metering injecting portion) includes a screw having a gas anti counterflow function, not illustrated, in a cylinder **221.** The dilute resin **6** is supplied from a hopper **222,** and the physical foaming agent **5** is supplied from the SCF supply unit **30.** Thus, the dilute resin **6** preferably is plasticized. Then, after metering of the dilute resin **6** containing the (physical or chemical) foaming agent **5** for a necessary amount for molding, the dilute resin **6** is injected into the mold **40** directly. Herein, the second injecting portion **220** comprises the screw with the gas anti counterflow function, and a foaming-agent supply portion **223** is disposed downstream of the hopper **222** (dilute-resin inlet), so the physical foaming agent **5** supplied from the foaming-agent supply portion **223** can be prevented from moving back upstream, and thereby the agent **5** and the dilute resin **6** can be prevented from leaking out from the hopper **222** properly. Also, since the reinforcement fiber **3** is not mixed with the dilute resin in the second injecting portion **220,** any breakage of the reinforcement fiber(s) **3** may not be caused. At an injecting end **224** (outlet) are provided a shut-off nozzle **225a** and/or a valve **225b,** and by their on-off operation for opening and closing, the dilute resin **6** at least partly is injected into the mold **40.**

Herein, it is preferable that a viscosity of the resin composite **4** containing the reinforcement fiber **3** is substantially equal to a viscosity of the dilute resin **6** to which the (physical or chemical) foaming agent **5** has been supplied. Accordingly, since the difference in the viscosity between the resin composite **4** and the dilute resin **6** is small, the breakage of the reinforcement fiber(s) **3** can be suppressed and the smooth mixing of the both can be attained. Namely, if the viscosity of the dilute resin **6** is improperly high, the reinforcement fiber(s) **3** would receive a larger stress at the time of mixing, and thereby the risk of breakage of the reinforcement fiber **3** would increase. Accordingly, it is preferable that the dilute resin **6** have a properly low viscosity so that the larger stress can be prevented from acting on the reinforcement fiber **3.**

And, since the resin composite **4** and the dilute resin **6** are injected into the mold **40** at the substantially same time, the both substances **4, 6** join together in the path substantially before the cavity **43** of the mold **40,** thereby promoting the mixing and/or dispersion of the foaming agent **5** in the resin composite **4.** Also, the foaming agent **5** is properly mixed in the cavity **43** of the mold **40,** and the resin composite **4** in which the reinforcement fiber(s) **3** with the specified (predetermined or predeterminable) content is dispersed uniformly is injected. Namely, the joining (confluence) of the both substances **4, 6** substantially in the mold **40** functions as a mixing promoting means. Thus, the resin molded article having a desirable foaming ratio and excellent properties, such as strength, rigidity and the like, can be provided.

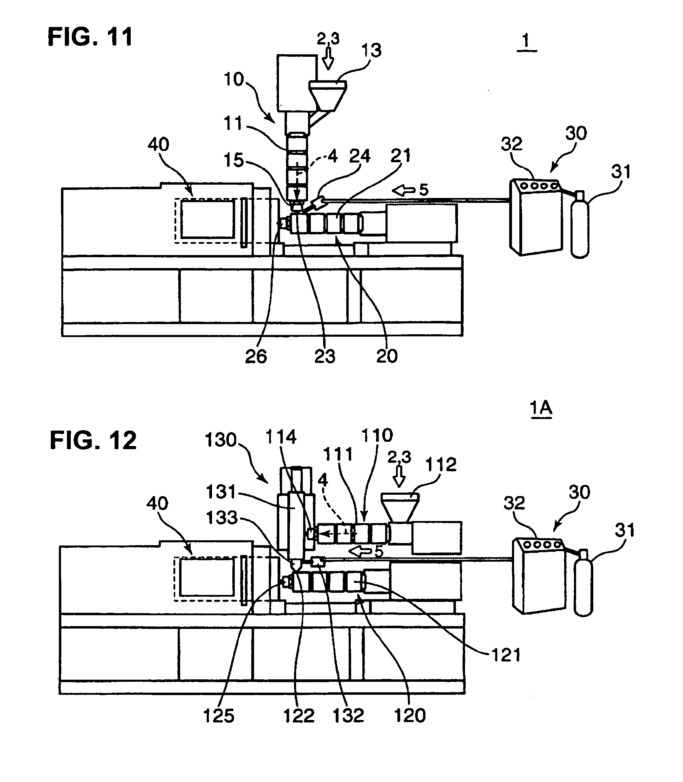

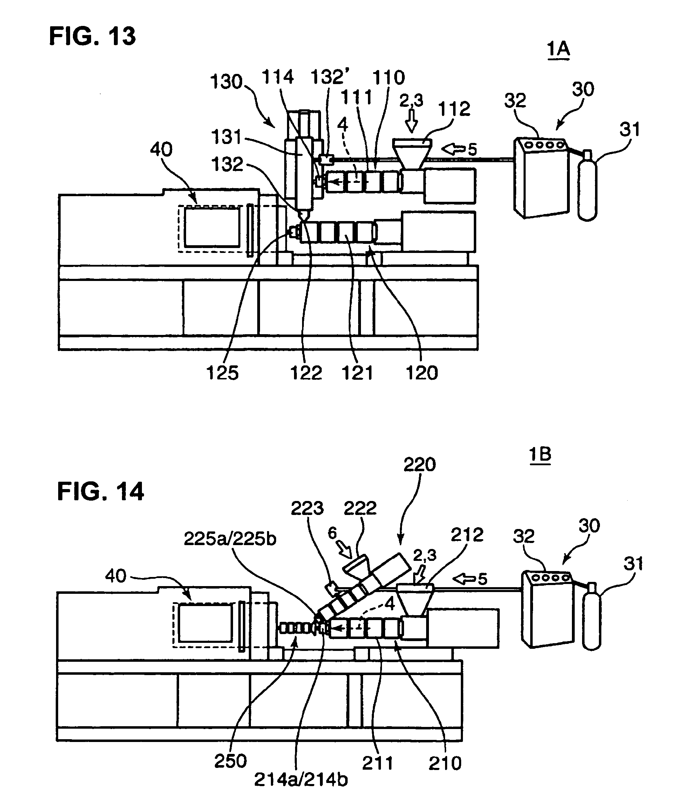

Hereinafter, some modifications of the above-described embodiments by changing partially or adding something will be described.
1) Although the physical foaming agent **5** is supplied at the second injecting portion **20** (foaming-agent supply portion **24**) located upstream of the junction portion **23** and the mixing and/or dispersion of the resin composite **4** with the (physical or chemical) foaming agent **5** and the reinforcement fiber(s) **3** is promoted at the junction portion **23** in the first embodiment, the supply portion of the physical foaming agent **5** may be located near the junction portion **23** (see FIG. **11**)**.** In this case, the foaming agent **5** is supplied at the same time as the confluence, so the mixing effect by the confluence can promote the mixing and dispersion of the foaming agent **5** in the resin composite **4.**
2) In the second embodiment, the (physical or chemical) foaming agent **5** is supplied at the metering injecting portion **120** (foaming-agent supply portion **123**) beside the junction portion **122** where the resin composite **4** (molten resin) that has been collected temporarily in the collector **130** is supplied. However, the supply portion of the foaming agent **5** may be located downstream (specifically, just upstream of the valve **133**) (see FIG. **12****,** foaming-agent supply portion **132**) or upstream (see FIG. **13****,** foaming-agent supply portion **132'**) of the supply portion of the resin composite **4** from the plasticizing pushing portion **110** as the resin collection portion **130.** In this case, the mixing and dispersion of the foaming agent **5** in the resin composite **4** is promoted at the junction portion **122** as properly.
3) Although the mixing nozzle **50** is provided in the first embodiment, the provision of the mixing nozzle should not be limited to the apparatus of the first embodiment. For example, in the above-described modification 1) of the first embodiment, the mixing nozzle may be disposed substantially downstream of the junction portion **23** to promote the mixing and dispersion, and the resin composite **4** may be injected into the cavity **43** of the mold **40.**
   Also, in the modification 2) of the second embodiment, the mixing nozzle having similar or substantially the same attaching manners (A-C) disclosed in the first embodiment may be provided for the promotion of the mixing and/or dispersion of the foaming-agent **5,** and then the resin composite **4** may be injected into the cavity **43** of the mold **40.**
   Further, in the third embodiment, the two injecting portions **210, 220** are connected to the mold **40** directly, and both the resin composite **4** and the dilute resin **6** join together in the mold **40.** However, the both injecting portions **210, 220** may be connected to the mixing nozzle **250,** the resin composite **4** and the dilute resin **6** are kneaded for the mixing and dispersion of the foaming agent **5,** and then injected into the mold **40** (see FIG. **14**). In this case, the foaming agent **5** is dispersed more uniformly in the resin composite **4** by the mixing effect in the mixing nozzle **250.**
4) Although the first embodiment discloses a manner in that the agitating plate **28** is provided in the cylinder **21** of the second injecting portion **20,** the provision of the at least one agitating plate **28** should not be limited to the manner disclosed in the first embodiment. For example, in the second embodiment or the modification 2) of the second embodiment, the agitating plate may be provided at the injection piston of the cylinder **121** of the metering injecting portion **120** for the promotion of the mixing and dispersion of the physical foaming-agent **5,** and then the resin composite **4** may be injected into the cavity **43** of the mold **40.**
   Also, in the modification 2) of the second embodiment, the agitating plate may be provided at the resin supply mechanism in the collector **131** of the collection portion **130** for the promotion of the mixing and/or dispersion of the (physical or chemical) foaming-agent **5,** and then the resin composite **4** may be supplied to the junction portion **122** of the metering injecting portion **120.**
   Further, any vibration adding means such as the supersonic vibrator preferably may be applied instead of the agitating plate in these embodiments.
5) Although the first embodiment discloses a manner in that the mixing portion 47 having the mixing-kneading function like the mixing nozzle **50** is provided at the hot runner portion **46** of the mold **40,** the similar or substantially same structure as this may be applied to any modification of the first embodiment, the second embodiment or its modification. Although the porous structure **24b** is disposed at the inner wall face of the injection nozzle **24a** at the foaming-agent supply portion **24** of the second injecting portion **20** to increase the contact area with the resin composite **4** in the first embodiment, the similar or substantially same structure as this may be applied to any modification of the first embodiment, the second embodiment or its modification.
6) Although the second injecting portion **20** includes the injection piston **22** therein and the resin composite **40** is at least partly injected into the cavity **43** of the mold **40** by the reciprocating movement of the injection piston **22** in the first embodiment, the second injecting portion **20** may include a screw or worm gear instead of the injection piston **22.**
7) The dispersion function of the (physical or chemical) foaming agent **5** in the resin composite **4** may be enhanced by any mixing-dispersion promoting means different from the above-described embodiments and/or modifications. The porous structure provided at the foaming-agent supply portion disclosed in the first embodiment can enhance the dispersion function of the (physical or chemical) foaming agent **5** in the resin composite **4** with a more simple and sure way, thereby providing the resin molded article with the excellent properties. This enhancement of the dispersion function of the foaming agent **5** in the resin composite **4** preferably can be materialized by increasing the pressure acting on the resin composite **4** (the pressure applied by the injection piston **22**) and/or by possibly lowering the resin temperature below the meting point (within a proper range for plasticizing). By adding or applying these ways or means, the mixing and/or dispersion of the (physical or chemical) foaming agent **5** in the resin composite **4** can be promoted with the simple and sure way. An independent use of any means of these may be also applicable.

Accordingly, there are provided a plasticizing-kneading step of plasticizing at least one type or kind of reinforcement fiber **3** and a resin **2** in a cylinder **11** having a screw **12,** and a supplying step (preferably comprising a metering-injecting step) of supplying a foaming agent **5** to the resin **4** and at least partly injecting them into a cavity of at least one mold **40,** preferably after metering the necessary amount of resin for molding, a foaming-agent supplying step of supplying the foaming agent **5** to the resin **4** passed through at least one nozzle **15** after being plasticized, and a mixing-dispersion promoting step of promoting mixing and/or dispersion of the foaming agent **5** in the resin **4** in or along a resin flow path from a supply portion of the foaming agent **5** to the cavity of the mold **40.** Accordingly, any breakage of reinforcement fiber(s) is prevented and the mixing and/or dispersion of the physical foaming agent is improved.

## Claims

1. A molding method of a fiber filler reinforced resin molded article, which includes a plasticizing-kneading step of plasticizing and kneading at least one reinforcement fiber **(3)** and a resin **(2)** in a material supply cylinder **(11; 111; 211)** having a screw **(12),** and a supplying step of supplying a foaming agent **(5)** to the resin **(4)** plasticized in the plasticizing-kneading step and injecting the resin **(4)** into a cavity **(43)** of at least one mold **(40),** the molding method comprising:
a foaming-agent supplying step of supplying the foaming agent **(5)** to the resin **(4)** that has passed through at least one nozzle and/or valve **(15; 114; 214a; 214b)** after being plasticized in the plasticizing-kneading step; and
a mixing-dispersion promoting step of promoting a mixing and/or dispersion of the foaming agent **(5)** in the resin **(4)** in a resin flow path from a supply portion of the foaming agent **(5)** to the cavity **(43)** of the mold **(40).**

2. The molding method of a fiber filler reinforced resin molded article of claim 1, wherein the mixing-dispersion promoting step comprises a step of agitation utilizing a flow of the resin **(4).**

3. The molding method of a fiber filler reinforced resin molded article of claim 2, wherein the agitation by utilizing the flow of the resin **(4)** is caused by a supply of the foaming agent **(5)** in the resin **(4)** in the supply step.

4. The molding method of a fiber filler reinforced resin molded article of any one of the preceding claims, wherein the mixing-dispersion promoting step comprises a step of adding a vibration to the resin **(4).**

5. The molding method of a fiber filler reinforced resin molded article of claim 4, wherein the addition of the vibration is adding a supersonic-wave vibration and/or an electromagnetic-wave vibration.

6. The molding method of a fiber filler reinforced resin molded article of any one of the preceding claims, wherein the mixing-dispersion promoting step comprises a step of a driven agitation with an agitating member **(28)** being driven in the resin flow.

7. The molding method of a fiber filler reinforced resin molded article of any one of the preceding claims, wherein the mixing-dispersion promoting step comprises a step that is conducted in the resin flow path in the mold **(40)** before the resin **(4)** flowing into the cavity **(43).**

8. The molding method of a fiber filler reinforced resin molded article of claim 7. wherein the mixing and/or dispersion of the foaming agent **(5)** is promoted by injecting the plasticized resin **(4)** with the reinforcement fiber **(3)** into a dilute resin **(6)** to which the foaming agent **(5)** has been supplied in the resin flow path in the mold **(40).**

9. The molding method of a fiber filler reinforced resin molded article of claim 8, wherein a viscosity of the resin **(4)** with the reinforcement fiber **(3)** is substantially equal to a viscosity of the dilute resin **(6)** to which the foaming agent **(5)** has been supplied.

10. The molding method of a fiber filler reinforced resin molded article of any one of the preceding claims, wherein the foaming agent **(5)** comprises a super critical fluid.

11. A molding apparatus **(1; 1A; 1 B)** of a fiber filler reinforced resin molded article, which includes at least one mold **(40)** having a cavity **(43)** that a resin **(4)** is injected therein, a plasticizing-kneading portion **(10; 110; 210)** operative to plasticize and knead at least one reinforcement fiber **(3)** and the resin **(2)** in a material supply cylinder **(11; 111; 211),** and a supply portion **(20; 120; 220)** operative to supply a foaming agent **(5)** to the resin **(4)** plasticized in the plasticizing-kneading portion **(10; 110; 210)** and inject the resin **(4)** into the cavity **(43)** of the mold **(40)** the molding apparatus **(1; 1A; 1B)** comprising:
a foaming-agent supplying portion **(24; 57; 57'; 123; 223; 132; 132')** operative to supply the foaming agent **(5)** to the resin **(4)** that has passed through at least one nozzle or valve **(15; 114; 214a; 214b)** after being plasticized in the plasticizing-kneading portion **(10; 110; 210);** and
a mixing-dispersion promoting portion **(23; 50; 47; 24b; 27A; 27B; 28; 122; 40; 250)** operative to promote a mixing and/or dispersion of the foaming agent **(5)** in the resin **(4)** in a resin flow path from a supply portion of the foaming agent **(5)** to the cavity **(43)** of the mold **(40).**

12. The molding apparatus **(1; 1A; 1B)** of a fiber filler reinforced resin molded article of claim 11, wherein the mixing-dispersion promoting portion **(23; 50; 47; 122; 40; 250)** comprises a portion to provide an agitation that utilizes a flow of the resin **(4).**

13. The molding apparatus **(1; 1A; 1B)** of a fiber filler reinforced resin molded article of claim 12, wherein the agitation utilizing the flow of the resin **(4)** is caused by a supply of the foaming agent **(5)** in the resin **(4)** in the supply portion **(20; 120; 220).**

14. The molding apparatus **(1)** of a fiber filler reinforced resin molded article of any one of the preceding claims 11 to 13, wherein the mixing-dispersion promoting portion comprises a device **(27A; 27B; 28)** operative to add a vibration to the resin **(4).**

15. The molding apparatus **(1)** of a fiber filler reinforced resin molded article of claim 14, wherein the device adding the vibration comprises a supersonic-wave vibration adding device **(27A)** and/or an electromagnetic-wave vibration adding device **(27B).**

16. The molding apparatus **(1)** of a fiber filler reinforced resin molded article of any one of the preceding claims 11 to 15, wherein the mixing-dispersion promoting portion comprises an agitating member **(28)** being driven in the resin flow.

17. The molding apparatus **(1B)** of a fiber filler reinforced resin molded article of any one of the preceding claims 11 through 16, wherein the mixing-dispersion promoting portion is at least partly provided in the resin flow path in the mold **(40)** before the resin flowing into the cavity **(43).**

18. The molding apparatus **(1B)** of a fiber filler reinforced resin molded article of claim 17, wherein the promotion of mixing and/or dispersion of the foaming agent **(5)** by the mixing-dispersion promoting portion is at least partly conducted by injecting the plasticized resin **(4)** with the reinforcement fiber **(3)** into a dilute resin **(6)** to which the foaming agent **(5)** has been supplied in the resin flow path in the mold **(40).**

19. The molding apparatus **(1A)** of a fiber filler reinforced resin molded article of claim 17 or 18, wherein the plasticized resin **(4)** with the reinforcement fiber **(3)** is collected in a resin collection portion **(130),** and the collected resin **(4)** at least partly is supplied to the mold **(40)** through the supply portion **(120).**

20. The molding apparatus **(1; 1A; 1B)** of a fiber filler reinforced resin molded article of any one of the preceding claims 11 through 19, wherein the foaming agent **(5)** comprises a super critical fluid.

## Patentansprüche

1. Formverfahren für einen Faserfüllmittel-verstärkten Harzformgegenstand, welches eine Plastifizier-Knet-Schritt des Plastifizierens und Knetens von mindestens einer Verstärkungsfaser (3) und einem Harz (2) in einem Materialzuführzylinder (11; 111; 211) mit einer Schnecke (12) und einen Zuführschritt des Zuführens eines Treibmittels (5) zu dem Harz (4), plastifiziert in dem Plastifizier-Knet-Schritt, rund Injizierens des Harzes (4) in einen Hohlraum (43) von mindestens einer Form (40) einschließt, wobei das Formverfahren umfaßt:
einen Treibmittel-Zuführschritt des Zuführens des Treibmittels (5) zu dem Harz (4), das durch mindestens eine Düse und/oder ein Ventil (15; 114; 214a; 214b) geleitet worden ist, nachdem es in dem Plastifizier-Knet-Schritt plastifiziert worden ist, und
einen Gemisch-Dispersion-fördernden Schritt des Förderns eines Mischens und/oder einer Dispersion des Treibmittels (5) in dem Harz (4) in einer Harzfließstrecke von einem Zuführabschnitt des Treibmittels (5) zu dem Hohlraum (43) der Form (40).

2. Formverfahren für einen Faserfüllmittel-verstärkten Harzformgegenstand gemäß Anspruch 1, wobei der Gemisch-Dispersion-fördernde Schritt ein Schritt des Rührens unter Verwendung eines Stroms bzw. Flusses des Harzes (4) umfaßt.

3. Formverfahren für einen Faserfüllmittel-verstärkten Harzformgegenstand gemäß Anspruch 2, wobei das Rühren unter Verwendung des Stroms des Harzes (4) durch ein Zuführen des Treibmittels (5) in das Harz (4) in dem Zuführschritt bewirkt wird.

4. Formverfahren für einen Faserfüllmittel-verstärkten. Harzformgegenstand gemäß einem der vorhergehenden Ansprüche, wobei der Gemisch-Dispersion-fördernde Schritt einen Schritt des Zugebens einer Vibration zu dem Harz (4) umfaßt.

5. Formverfahren für einen Faserfüllmittel-verstärkten Harzformgegenstand gemäß Anspruch 4, wobei das Zugeben der Vibration das Zugeben einer Ultraschallvibration und/oder eine Vibration mittels elektromagnetischer Welle ist.

6. Formverfahren für einen Faserfüllmittel-verstärkten Harzformgegenstand gemäß einem der vorhergehenden Ansprüche, wobei der Gemisch-Dispersion-fördernde Schritt einen Schritt einer angetriebenen Rührdurchführung mit einem Rührglied (28), angetrieben in dem Harzstrom, umfaßt.

7. Formverfahren für einen Faserfüllmittel-verstärkten Harzformgegenstand gemäß einem der vorhergehenden Ansprüche, wobei der Gemisch-Dispersion-fördernde Schritt einen Schritt umfaßt, der in der Harzfließstrecke in der Form (40) durchgeführt wird, bevor das Harz (4) in den Hohlraum (43) fließt.

8. Formverfahren für einen Faserfüllmittel-verstärkten Harzformgegenstand gemäß Anspruch 7, wobei das Mischen und/oder die Dispersion des Treibmittels (5) durch Injizieren des plastifizierten Harzes (4) mit der Verstärkungsfaser (3) in ein verdünntes Harz (6), zu welchem das Treibmittel (5) in der Harzfließstrecke in der Form (40) zugeführt worden ist, gefördert wird.

9. Formverfahren für einen Faserfüllmittel-verstärkten Harzformgegenstand gemäß Anspruch 8; wobei eine Viskosität des Harzes (4) mit der Verstärkungsfaser (3) im wesentlichen gleich einer Viskosität des verdünnten Harzes (6) ist, zu welchem das Treibmittel (5) zugeführt worden ist.

10. Formverfahren für einen Faserfüllmittel-verstärkten Harzformgegenstand gemäß einem der vorhergehenden Ansprüche, wobei das Treibmittel (5) ein überkritisches Fluid umfaßt.

11. Formvorrichtung (1; 1A; 1B) für einen Faserfüllmittel-verstärkten Harzformgegenstand, welche mindestens eine Form (40) mit einem Hohlraum (43), worin ein Harz (4) injiziert wird, einen Plastifizier-Knet-Abschnitt (10; 110; 210), funktionsfähig mindestens eine Verstärkungsfaser (3) und das Harz (2) in einem Materialzuführzylinder (11; 111; 211) zu plastifizieren und zu kneten, einen Zuführabschnitt (20; 120; 220), funktionsfähig ein Treibmittel (5) zu dem, in dem Plastifizier-Knet-Abschnitt (10; 110; 210) plastifizierten Harz (4) zu beschicken und das Harz (4) in den Hohlraum (43) der Form (40) zu injizieren, wobei die Formvorrichtung (1; 1A; 1B) umfaßt:
einen Treibmittelzuführabschnitt (24; 57; 57'; 123; 223; 132; 132'), funktionsfähig das Treibmittel (5) zu dem Harz (4), das durch mindestens eine Düse oder ein Ventil (15; 114; 214a; 214b) geleitet worden ist, nachdem es in dem Plastifizier-Knet-Abschnitt (10; 110; 210) plastifiziert worden ist, zu beschikken, und
ein Gemisch-Dispersion-fördernder Abschnitt (23; 50; 47; 24b; 27A; 27B; 28; 122; 40; 250), funktionsfähig ein Mischen und/oder eine Dispersion des Treibmittels (5) in dem Harz (4) in einer Harzfließstrecke von einem Zuführabschnitt des Treibmittels (5) zu dem Hohlraum (43) der Form (40) zu fördern.

12. Formvorrichtung (1; 1A; 1 B) für einen Faserfüllmittel-verstärkten Harzformgegenstand gemäß Anspruch 11, wobei der Gemisch-Dispersion-fördernde Abschnitt (23; 50; 47; 122; 40; 250) einen Abschnitt zur Bereitstellung eines Rührens, das einen Strom des Harzes (4) verwendet, umfaßt.

13. Formvorrichtung (1; 1A; 1B) für einen Faserfüllmittel-verstärkten Harzformgegenstand gemäß Anspruch 12, wobei das Rühren unter Verwendung des Stromes des Harzes (4) durch ein Zuführen des Treibmittels (5) in das Harz (4) in dem Zuführabschnitt (20; 120; 220) bewirkt wird.

14. Formvorrichtung (1) für einen Faserfüllmittel-verstärkten Harzformgegenstand gemäß einem der vorhergehenden Ansprüche 11 bis 13, wobei der Gemisch-Dispersion-fördernde Abschnitt eine Vorrichtung (27A; 27B; 28), funktionsfähig eine Vibration zu dem Harz (4) zu geben, umfaßt.

15. Formvorrichtung (1) für einen Faserfüllmittel-verstärkten Harzformgegenstand gemäß Anspruch 14, wobei die Vorrichtung, welche die Vibration zugibt, eine Ultraschallvibration-zuführende Vorrichtung (27A) oder eine Vorrichtung (27B), welche die Vibration mittels elektromagnetischer Wellen zugibt, umfaßt.

16. Formvorrichtung (1) für einen Faserfüllmittel-verstärkten Harzformgegenstand gemäß einem der vorhergehenden Ansprüche 11 bis 15, wobei der Gemisch-Dispersion-fördernde Abschnitt ein Rührglied (28), welches in dem Harzstrom angetrieben wird, umfaßt.

17. Formvorrichtung (1B) für einen Faserfüllmittel-verstärkten Harzformgegenstand gemäß einem der vorhergehenden Ansprüche 11 bis 16, wobei der Gemisch-Dispersion-fördernde Abschnitt mindestens teilweise in der Harzfließstrecke in der Form (40) angeordnet ist, bevor das Harz in den Hohlraum (43) fließt.

18. Formvorrichtung (1 B) für einen Faserfüllmittel-verstärkten Harzformgegenstand gemäß Anspruch 17, wobei das Fördern des Mischens und/oder der Dispersion des Treibmittels (5) durch den Gemisch-Dispersion-fördernden Abschnitt mindestens teilweise durch Injizieren des plastifizierten Harzes (4) mit der verstärkten Faser (3) in ein verdünntes Harz (6), zu welchem das Treibmittel (5) in der Harzfließstrecke in der Form (40) zugeführt worden ist, durchgeführt wird.

19. Formvorrichtung (1A) für einen Faserfüllmittel-verstärkten Harzformgegenstand gemäß Anspruch 17 oder 18, wobei das plastifizierte Harz (4) mit der Verstärkungsfaser (3) in einem Harzsammelabschnitt (130) gesammelt wird, und das gesammelte Harz (4) mindestens teilweise zu der Form (40) durch den Zuführabschnitt (120) zugeführt wird.

20. Formvorrichtung (1; 1 A; 1 B) für einen Faserfüllmittel-verstärkten Harzformgegenstand gemäß einem der vorhergehenden Ansprüche 11 bis 19, wobei das Treibmittel (5) ein überkritisches Fluid umfaßt.

## Revendications

1. Méthode de moulage d'un article moulé en résine renforcée par une charge de fibres, qui comprend une étape de plastification - malaxage pour plastifier et malaxer au moins une fibre de renforcement (3) et une résine (2) dans un cylindre de distribution de matière (11 ; 111 ; 211) comportant une vis (12), et une étape de fourniture pour fournir un agent de moussage (5) à la résine (4) qui a été plastifiée dans l'étape de plastification - malaxage et pour injecter la résine (4) dans une cavité (43) d'au moins un moule (40), la méthode de moulage comprenant :
une étape de fourniture d'agent de moussage pour fournir l'agent de moussage (5) à la résine (4) qui est passée à travers au moins une buse et/ou une valve (15 ; 114 ; 214a ; 214b) après plastification dans l'étape de plastification - malaxage; et
une étape engendrant le mélange - la dispersion pour créer un mélange et/ou une dispersion de l'agent de moussage (5) dans la résine (4) dans un chemin d'écoulement de résigne allant d'une partie de fourniture de l'agent de moussage (5) à la cavité (43) du moule (40).

2. Méthode de moulage d'un article moulé en résine renforcée par une charge de fibres selon la revendication 1, dans laquelle l'étape engendrant le mélange - la dispersion comprend une étape d'agitation utilisant un écoulement de la résine (4).

3. Méthode de moulage d'un article moulé en résine renforcée par une charge de fibres selon la revendication 2, dans laquelle l'agitation par utilisation de l'écoulement de la résine (4) est engendrée par une introduction de l'agent de moussage (5) dans la résine (4), dans l'étape de fourniture.

4. Méthode de moulage d'un article moulé en résine renforcée par une charge de fibres selon une quelconque des revendications précédentes, dans laquelle l'étape engendrant le mélange - la dispersion comprend une étape d'addition d'une vibration à la résine (4).

5. Méthode de moulage d'un article moulé en résine renforcée par une charge de fibres selon la revendication 4, dans laquelle l'addition de la vibration consiste à ajouter une vibration d'onde ultrasonore et/ou une vibration d'onde électromagnétique.

6. Méthode de moulage d'un article moulé en résine renforcée par une charge de fibres selon une quelconque des revendications précédentes, dans laquelle l'étape engendrant le mélange - la dispersion comprend une étape d'une agitation entraînée avec un élément d'agitation (28) entraîné dans l'écoulement de résine.

7. Méthode de moulage d'un article moulé en résine renforcée par une charge de fibres selon une quelconque des revendications précédentes, dans laquelle l'étape engendrant le mélange - la dispersion comprend une étape qui est effectuée dans le chemin d'écoulement de résine dans le moule (40) avant que la résine (4) pénètre dans la cavité (43).

8. Méthode de moulage d'un article moulé en résine renforcée par une charge de fibres selon la revendication 7, dans laquelle le mélange et/ou la dispersion de l'agent de moussage (5) sont engendrés par injection de la résine plastifiée (4) avec la fibre de renforcement (3) dans une résine diluée (6) à laquelle l'agent de moussage (5) a été fourni dans le chemin d'écoulement de résine dans le moule (40).

9. Méthode de moulage d'un article moulé en résine renforcée par une charge de fibres selon la revendication 8, dans laquelle une viscosité de la résine (4) avec la fibre de renforcement (3) est sensiblement égale à une viscosité de la résine diluée (6) à laquelle l'agent de moussage (5) a été fourni.

10. Méthode de moulage d'un article moulé en résine renforcée par une charge de fibres selon une quelconque des revendications précédentes, dans laquelle l'agent de moussage (5) comprend un fluide supercritique.

11. Appareil de moulage (1 ; 1A ; 1B) d'un article moulé en résine renforcée par une charge de fibres, qui comprend au moins un moule (40) ayant une cavité (43) dans laquelle une résine (4) est injectée, une partie de plastification - malaxage (10 ; 110 ; 210) qui agit pour plastifier et malaxer au moins une fibre de renforcement (3) et la résine (2) dans un cylindre de distribution de matière (11 ; 111 ; 211), et une partie de fourniture (20 ; 120 ; 220°) qui agit pour fournir un agent de moussage (5) à la résine (4) qui a été plastifiée dans la partie de plastification - malaxage (10 ; 110 ; 210) et injecter la résine (4) dans la cavité (43) du moule (40) l'appareil de moulage (1 ; 1A ; 1B) comprenant :
une partie de fourniture d'agent de moussage (24 ; 57 ; 57' ; 123 ; 223 ; 132 ; 132') qui agit pour fournir l'agent de moussage (5) à la résine (4) qui a traversé au moins une buse ou une valve (15 ; 114 ; 214a ; 214b) après plastification dans la partie de plastification - malaxage (10 ; 110 ; 210) ; et
une partie engendrant le mélange - la dispersion (23 ; 50 ; 47 ; 24b : 27A ; 27B ; 28 ; 122 ; 40 ; 250) qui agit pour engendrer un mélange et / ou une dispersion de l'agent de moussage (5) dans la résine (4) dans un chemin d'écoulement de résine allant d'une partie de fourniture de l'agent de moussage (5) à la cavité (43) du moula (40).

12. Appareil de moulage (1 ; 1A ; 1B) d'un article moulé en résine renforcée par une charge de fibres selon la revendication 11, dans lequel la partie engendrant le mélange - la dispersion (23 ; 50 ; 47 ; 122 ; 40 ; 250) comprend une portion de création d'une agitation qui utilise un écoulement de la résine (4).

13. Appareil de moulage (1 ; 1A ; 1B) d'un article moulé en résine renforcée par une charge de fibres selon la revendication 12, dans lequel l'agitation utilisant l'écoulement de la résine (4) est engendrée par une fourniture de l'agent de moussage (5) dans la résine (4) dans la partie de fourniture (20 ; 120 ; 220).

14. Appareil de moulage (1) d'un article moulé en résine renforcée par une charge de fibres selon une quelconque des revendications précédentes 11 à 13, dans lequel la partie engendrant le mélange - la dispersion comprend un dispositif (27A ; 27B ; 28) qui agit pour ajouter une vibration à la résine (4).

15. Appareil de moulage (1) d'un article moulé en résine renforcée par une charge de fibres selon la revendication 14, dans lequel le dispositif ajoutant la vibration comprend un dispositif d'addition de vibration d'onde ultrasonore (27A) et/ou un dispositif d'addition de vibration d'onde électro.magnétique (27B).

16. Appareil de moulage (1) d'un article moulé en résine renforcée par une charge de fibres selon une quelconque des revendications précédentes 11 à 15, dans lequel la partie engendrant le mélange - la dispersion comprend un élément d'agitation (28) entraîné dans l'écoulement de résine.

17. Appareil de moulage (1B) d'un article moule en résine renforcée par une charge de fibres selon une quelconque des revendications précédentes 11 à 16, dans lequel la partie engendrant le mélange - la dispersion est au moins partiellement prévue dans le chemin d'écoulement de résine dans le moule (40) avant que la résine pénètre dans la cavité (43).

18. Appareil de moulage (1B) d'un article moulé en résine renforcée par une charge de fibres selon la revendication 17, dans lequel la création du mélange et/ou de la dispersion de l'agent de moussage (5) par la partie engendrant le mélange - la dispersion est au moins partiellement effectuée par injection de la résine plastifiée (4) avec la fibre de renforcement (3) dans une résine diluée (6) à laquelle l'agent de moussage (5) a été fourni dans le chemin d'écoulement de résine dans le moule (40).

19. Appareil de moulage (1A) d'un article moulé en résine renforcée par une charge de fibres selon la revendication 17 ou 18, dans lequel la résine plastifiée (4) avec la fibre de renforcement (3) est collectée dans une partie de collecte de résine (130), et la résine collectée (4) est fournie au moins partiellement au moule (40) par l'intermédiaire de la partie de fourniture (120).

20. Appareil de moulage (1 ; 1A ; 1B) d'un article moulé en résine renforcée par une charge de fibres selon une quelconque des revendications précédentes 11 à 19, dans lequel l'agent de moussage (5) comprend un fluide supercritique.
